(19) Europäisches Patentamt / European Patent Office / Office européen des brevets

(11) **EP 4 101 636 A1**

(12) **EUROPEAN PATENT APPLICATION**
published in accordance with Art. 153(4) EPC

(43) Date of publication:
**14.12.2022 Bulletin 2022/50**

(21) Application number: **21911002.0**

(22) Date of filing: **23.12.2021**

(51) International Patent Classification (IPC):
**B32B 9/00** *(2006.01)*    **C08K 5/17** *(2006.01)*
**C08L 23/08** *(2006.01)*    **C08L 29/04** *(2006.01)*
**C08L 33/02** *(2006.01)*    **C08L 101/00** *(2006.01)*
**C08L 101/08** *(2006.01)*    **C08K 3/24** *(2006.01)*
**C08K 3/28** *(2006.01)*    **C08K 3/34** *(2006.01)*

(52) Cooperative Patent Classification (CPC):
**B32B 9/00; C08K 3/24; C08K 3/28; C08K 3/34;**
**C08K 5/17; C08L 23/08; C08L 29/04; C08L 33/02;**
**C08L 101/00; C08L 101/08**

(86) International application number:
**PCT/JP2021/048012**

(87) International publication number:
**WO 2022/138863 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.12.2020 JP 2020215368**

(71) Applicant: **Nissan Chemical Corporation**
**Tokyo 103-6119 (JP)**

(72) Inventors:
• **HIDA, Masahiro**
  **Funabashi-shi, Chiba 274-0052 (JP)**
• **YAMADA, Shuhei**
  **Funabashi-shi, Chiba 274-0052 (JP)**
• **LIU, Jiahao**
  **Sodegaura-shi, Chiba 299-0266 (JP)**
• **KITAGAWA, Hirotake**
  **Sodegaura-shi, Chiba 299-0266 (JP)**

(74) Representative: **Hoffmann Eitle**
**Patent- und Rechtsanwälte PartmbB**
**Arabellastraße 30**
**81925 München (DE)**

(54) **COMPOSITION FOR FORMING GAS BARRIER FILM, GAS BARRIER FILM AND METHOD FOR PRODUCING SAME**

(57)    There is provided a gas barrier film-forming composition exhibiting high film formability and a gas barrier film exhibiting low HAZE (haze value), high transparency, and high water vapor barrier property.

A gas barrier film-forming composition comprising the following components (A), (B), and (C): component (A): plate-like particles (A) composed of exfoliated layer substances generated through interlayer exfoliation of a layered compound, the plate-like particles (A) having an average thickness of 0.7 nm to 100 nm, an average major-axis length of 100 nm to 100,000 nm, and a ratio of (maximum major-axis length/width orthogonal to maximum major-axis length) of 1.0 to 10.0, and containing quaternary ammonium ions (a) each having a total carbon atom number of 13 to 45 and one or two $C_{10-20}$ alkyl groups, and an anionic surfactant (b) having an ammonium ion, wherein the amount of each of the quaternary ammonium ions (a) and the anionic surfactant (b) is more than 0% by mass and 3.0% by mass or less relative to the mass of the plate-like particles (A); component (B): a water-soluble polymer (B); and component (C): an aqueous medium. The gas barrier film-forming composition, wherein the layered compound is ilerite. A formed product comprising a base and a gas barrier film disposed on the surface of the base.

EP 4 101 636 A1

**Description**

TECHNICAL FIELD

The present invention relates to a gas barrier film-forming composition containing plate-like particles composed of exfoliated layer substances generated through interlayer exfoliation of a layered compound, a gas barrier film, and a production method therefor.

BACKGROUND ART

Gas barrier films are required to be formed for flexible displays and bases therefor, film sheets, packaging sheets, etc. to be used in displays for the electronic industry and bases or films therefor and packaging materials for the food industry under conditions where they are affected by outside air, for example, under conditions where exposure to water vapor must be avoided.

For example, it has been disclosed that a resin composition containing a vinyl alcohol polymer having an ethylene content of 0 to 70 mol% and a swellable layered silicate in which quaternary ammonium ions are introduced between layers of the layered silicate is used as a gas barrier film of a packaging sheet for food packaging, etc. (see Patent Document 1).

There has been disclosed a gas barrier film including a film formed from a layered inorganic compound wherein hydrophobic inorganic compound layers and hydrophilic inorganic compound layers are alternately disposed (see Patent Document 2).

There has been disclosed a gas barrier layer-forming composition produced by a process in which a solution is prepared by mixing of cellulose fiber, an inorganic layered compound, and water, and defibration of the cellulose fiber contained in the aqueous solution and exfoliation of the inorganic layered compound are simultaneously performed with dispersion means (see Patent Document 3).

There has been disclosed a gas barrier coating for film, which is formed by a process including coating a base (e.g., film) with a coating liquid containing a water-soluble polymer and a water-dispersible layered double hydroxide (see Patent Document 4).

It has been disclosed that a dispersion of plate-like particles composed of exfoliated layer substances generated through interlayer exfoliation of a layered compound containing silica as a main component (e.g., ilerite) is prepared by interlayer exfoliation of the layered compound with a quaternary ammonium compound and dispersion of the resultant product in an aqueous medium with an anionic surfactant, and a base is coated with the dispersion of the plate-like particles to thereby form a film (see Patent Document 5).

Prior Art Documents

Patent Documents

Patent Document 1: JP 2001-316551 A
Patent Document 2: JP 2007-313891 A
Patent Document 3: JP 2011-057912 A
Patent Document 4: JP 2020-513298 A
Patent Document 5: WO 2020-153352 pamphlet

SUMMARY OF THE INVENTION

Problems to be Solved by the Invention

The aforementioned gas barrier film is used on the surface of a material such as glass or plastic, or is applied to a flat or curved surface or applied to a flexible plastic base. Thus, when applied to the top surface of such a base, the gas barrier film is required to exhibit sufficient film formability on the base.

Furthermore, the aforementioned gas barrier film plays a role in blocking gas on the base, and the gas barrier film has a structure wherein plate-like substances (i.e., a main component) are laminated. Therefore, gaps between these plate-like substances exhibit a maze effect, whereby gas is less likely to reach the base; i.e., the base is blocked from the gas. Thus, the gas barrier film is expected to achieve high gas barrier performance.

However, it was found that quaternary ammonium ions or an anionic surfactant used for interlayer exfoliation of a layered compound during the production of a gas barrier film-forming composition impairs film formability when the gas barrier film-forming composition is applied to a base to form a film, and the impaired film formability leads to a poor maze effect of plate-like particles, resulting in impairment of gas barrier property.

The present invention has been accomplished on the basis of the finding that a gas barrier film-forming composition having high film formability can be obtained by reducing the amount of a component that is necessary during production of the gas barrier film-forming composition, but impairs film formability in a subsequent film formation process.

Means for Solving the Problems

A first aspect of the present invention is a gas barrier film-forming composition comprising the following components (A), (B), and (C):

component (A): plate-like particles (A) composed of exfoliated layer substances generated through interlayer exfoliation of a layered compound, the plate-like particles (A) having an average thickness of 0.7 nm to 100 nm, an average major-axis length of 100 nm to 100,000 nm, and a ratio of (maximum major-axis length/width orthogonal to maximum major-axis length) of 1.0 to 10.0, and containing quaternary ammonium ions (a) each having a total carbon atom number of 13 to 45 and one or two $C_{10-20}$ alkyl groups, and an anionic surfactant (b) having an ammonium ion, wherein the amount of each of the quaternary ammonium ions (a) and the anionic surfactant (b) is more than 0% by mass and 3.0% by mass or less relative to the mass of the plate-like particles (A);
component (B): a water-soluble polymer (B); and
component (C): an aqueous medium.

A second aspect of the present invention is the gas barrier film-forming composition according to the first aspect, wherein the layered compound is ilerite.

A third aspect of the present invention is the gas barrier film-forming composition according to the first or second aspect, wherein the plate-like particles (A) are present in an aqueous dispersion in which the layered compound has an average particle diameter of 10 nm to 500,000 nm as measured by dynamic light scattering.

A fourth aspect of the present invention is the gas barrier film-forming composition according to any one of the first to third aspects, wherein the amount of each of the quaternary ammonium ions (a) and the anionic surfactant (b) is 0.01 to 3.0% by mass relative to the mass of the plate-like particles (A).

A fifth aspect of the present invention is the gas barrier film-forming composition according to any one of the first to fourth aspects, wherein the water-soluble polymer (B) has a monomer unit structure containing a hydroxyl group or a carboxyl group in the entire polymer unit structure, and the proportion of the monomer unit structure is 30 mol% to 100 mol%.

A sixth aspect of the present invention is the gas barrier film-forming composition according to any one of the first to fifth aspects, wherein the water-soluble polymer (B) is an ethylene-vinyl alcohol copolymer (EVOH), polyvinyl alcohol (PVA), polyacrylic acid (PAA) or a copolymer thereof, or a mixture of any of these.

A seventh aspect of the present invention is the gas barrier film-forming composition according to any one of the first to sixth aspects, wherein the amount of the component (A) is 0.1 to 10% by mass, and the amount of the component (B) is 0.1 to 10% by mass.

An eighth aspect of the present invention is the gas barrier film-forming composition according to any one of the first to seventh aspects, wherein the composition further comprises an alkali component and has a pH of 8.0 to 12.0.

A ninth aspect of the present invention is the gas barrier film-forming composition according to the eighth aspect, wherein the alkali component is ammonia, a primary alkylamine, a secondary alkylamine, a tertiary alkylamine, or a quaternary alkylammonium hydroxide.

A tenth aspect of the present invention is a formed product comprising a base and a gas barrier film disposed on the surface of the base, wherein the gas barrier film is formed from the gas barrier film-forming composition according to any one of the first to ninth aspects.

An eleventh aspect of the present invention is the formed product according to the tenth aspect, wherein the base is polyethylene terephthalate, polyethylene, polypropylene, polyamide, nylon, polylactic acid, polyvinyl chloride, or polyvinyl dichloride.

A twelfth aspect of the present invention is the formed product according to the tenth or eleventh aspect, wherein the gas barrier film has a thickness of 50 nm to 50 $\mu$m.

A thirteenth aspect of the present invention is the formed product according to any one of the tenth to twelfth aspects, wherein the gas is water vapor, and the value obtained by multiplying water vapor transmission rate ($g/m^2/day$) by thickness ($\mu$m) is 0.001 to 20 $g/m^2/day \times \mu$m.

A fourteenth aspect of the present invention is the formed product according to any one of the tenth to thirteenth aspects, wherein the formed product has a HAZE (haze value) of 15 to 50.

A fifteenth aspect of the present invention is a method for producing the gas barrier film-forming composition according to any one of the first to ninth aspects, the method comprising the following steps (i) to (vii):

step (i): a step of producing an aqueous dispersion of a layered compound;

step (ii): a step of adding quaternary ammonium ions (a) each having a total carbon atom number of 13 to 45 and one or two $C_{10-20}$ alkyl groups to the aqueous dispersion produced in the step (i) in an amount corresponding to one to 20 times the ion-exchange capacity of the layered compound, and heating the resultant mixture at 40 to 100°C for 1 to 100 hours;

step (iii): a step of adding pure water to the liquid prepared in the step (ii), and removing a sodium-ion-containing liquid to the outside of the system so as to achieve a sodium ion concentration of 1,000 ppm or less in the liquid;

step (iv): a step of dispersing solid matter contained in the product prepared in the step (iii) in an aqueous solution of an anionic surfactant (b) containing ammonium ions at a concentration of 0.01 to 20% by mass, and then adding ammonia to the resultant dispersion so as to adjust the pH of the dispersion to 9.0 to 12.0;

step (v): a step of heating the dispersion prepared in the step (iv) at 40 to 100°C for 1 to 100 hours;

step (vi): a step of obtaining, from the dispersion prepared in the step (v), plate-like particles (A) containing reduced amounts of the quaternary ammonium ions (a) and the anionic surfactant (b); and

step (vii): a step of mixing the plate-like particles (A) obtained in the step (vi) with a water-soluble polymer (B) and an aqueous medium (C).

A sixteenth aspect of the present invention is the method for producing the gas barrier film-forming composition according to the fifteenth aspect, wherein the step (vi) is a step of obtaining the plate-like particles (A) containing reduced amounts of the quaternary ammonium ions (a) and the anionic surfactant (b) by the following step (vi-1), (vi-2), or (vi-3), or any combination of these:

step (vi-1): centrifuging the dispersion of the plate-like particles (A) at a centrifugal acceleration of 3,000 to 100,000 G, to thereby yield the plate-like particles (A);

step (vi-2): precipitating the plate-like particles (A) by addition of a hydrophilic organic solvent to the dispersion of the plate-like particles (A), followed by solid-liquid separation; or

step (vi-3): separating the plate-like particles (A) by filtration of the dispersion of the plate-like particles (A) with a filter or ultrafiltration of the dispersion.

A seventeenth aspect of the present invention is the method for producing the gas barrier film-forming composition according to the fifteenth or sixteenth aspect, wherein the method further comprises the following step (vii-1) after the step (vi):

step (vii-1): a step of mixing the plate-like particles (A) obtained in the step (vi) with an alkali component and the aqueous medium (C) to thereby adjust the pH of the resultant mixture to 8.0 to 12.0, and then subjecting the mixture to dispersion treatment to thereby prepare a dispersion of the plate-like particles (A):

step (vii): a step of mixing the dispersion of the plate-like particles (A) prepared in the step (vii-1) with the water-soluble polymer (B) and the aqueous medium (C).

An eighteenth aspect of the present invention is a method for producing a formed product, the method comprising a step of applying the gas barrier film-forming composition according to any one of the first to ninth aspects to the surface of a base, and heating the composition at a temperature of 30 to 200°C, to thereby form a gas barrier film.

A nineteenth aspect of the present invention is the method for producing a formed product according to the eighteenth aspect, wherein the composition is applied by roll coating, spray coating, ink jetting, spin coating, bar coating, slit coating, or dipping.

Effects of the Invention

According to the present invention, when the gas barrier film-forming composition is applied to a base to form a gas barrier film on the base, the composition exhibits good film formability. The film formability of the composition can effectively form a gas barrier film exhibiting low haze, high transparency, and high water vapor barrier property.

MODES FOR CARRYING OUT THE INVENTION

The present invention is directed to a gas barrier film-forming composition comprising the following components (A), (B), and (C):

component (A): plate-like particles (A) composed of exfoliated layer substances generated through interlayer exfoliation of a layered compound, the plate-like particles (A) having an average thickness of 0.7 nm to 100 nm, an average major-axis length of 100 nm to 100,000 nm, and a ratio of (maximum major-axis length/width orthogonal to maximum major-axis length) of 1.0 to 10.0, and containing quaternary ammonium ions (a) each having a total carbon atom number of 13 to 45 and one or two $C_{10-20}$ alkyl groups, and an anionic surfactant (b) having an ammonium ion, wherein the amount of each of the quaternary ammonium ions (a) and the anionic surfactant (b) is more than 0% by mass and 3.0% by mass or less relative to the mass of the plate-like particles (A);

component (B): a water-soluble polymer (B); and

component (C): an aqueous medium.

The layered compound used in the present invention is a laminate of plate-like substances, and electrical bonding of the plate-like substances is achieved through intercalation of alkali metal ions between plate-like substance layers. The electrical bonding force is drastically reduced by swelling interlayer spaces with a bulky compound (e.g., quaternary ammonium ions), and interlayer exfoliation of the plate-like substances occurs through addition of an anionic surfactant, etc. and thermal treatment, whereby the plate-like substances are separated one by one into sheet-like substances. The plate-like substances may be called "plate-like particles (A)."

A dispersion of the plate-like particles (A) (i.e., the component (A)) used in the present invention is formed by subjecting the layered compound to interlayer exfoliation while dispersing the layered compound in a dispersion medium and by dispersing the plate-like particles (A) in a medium. Thus, the plate-like particles (A) may be used in the form of dispersion. The anionic surfactant used for the interlayer exfoliation is also used for improving the dispersibility of the plate-like particles in a medium. When the plate-like particles (A) contain a silanol group, sufficient dispersibility is achieved during dispersion of the particles because of the repulsive force between the negative charge of the silanol group and the negative charge of the anionic surfactant.

The plate-like particles (A) may be dispersed in a dispersion medium containing the liquid medium, the quaternary ammonium ions (a), and the anionic surfactant (b) having an ammonium ion; at least a portion of the plate-like particles (A) may be coated with or adsorbed on either or both of the quaternary ammonium ions (a) and the anionic surfactant (b); or either or both of the quaternary ammonium ions (a) and the anionic surfactant (b) may intervene between the layers of the plate-like particles (A).

The plate-like particles (A) preferably have a Na ion concentration of 0.1% by mass (1,000 ppm) or less, or 0.01% by mass (100 ppm) or less.

The concentration of the plate-like particles (A) in the aforementioned dispersion may be 30% by mass or less, or 0.01 to 30% by mass, or 0.1 to 30% by mass.

The average major-axis length of the plate-like particles (A) and the width orthogonal to the maximum major-axis length can be measured through observation with a transmission electron microscope. The ratio of [maximum major-axis length (nm)/width (nm) orthogonal to maximum major-axis length] of the plate-like particles (A) may be called "aspect ratio," and falls within a range of 1.0 to 10.0. The average width (nm) orthogonal to the maximum major-axis length of the plate-like particles (A) may be 50 nm to 100,000 nm, 50 nm to 10,000 nm, or 50 nm to 3,000 nm.

The average thickness of the plate-like particles (A) can be measured through application of the dispersion on a base plate and observation of the coating surface of the base plate with an AFM (atomic force microscope). The average thickness of the plate-like particles (A) is 0.7 nm to 100 nm, or 0.7 nm to 40 nm. The observation with the AFM can be performed on a sample prepared by dropwise addition of the dispersion containing the plate-like particles at a concentration of 1% by mass or less onto a mica base plate and subsequent drying. The sample is preferably dried naturally, but may be dried through heating. Alternatively, a sample prepared through application of the dispersion onto a base plate by the Langmuir-Blodgett method may be used for measurement with an AFM.

The average particle diameter of the plate-like particles (A) can be determined as the average particle diameter of the plate-like particles (A) in the dispersion measured by dynamic light scattering. In this case, the concentration (the concentration of the plate-like particles) of the dispersion used for the measurement may be 30% by mass or less.

The plate-like particles (A) may be exfoliated layer substances generated through interlayer exfoliation of the layered compound. Examples of the layered compound include a layered polysilicate, a clay mineral, a manganate, a titanate, and a niobate. Examples of the clay mineral include smectite and vermiculite. Examples of the layered polysilicate include kanemite, makatite, kenyaite, and ilerite.

The layered compound may be a layered compound formed through processing of a layered substance prepared from the aforementioned layered polysilicate, clay mineral, manganate, titanate, or niobate serving as a raw material.

Among these layered compounds, ilerite can be preferably used. Ilerite has a chemical formula of $Na_2O \cdot 8SiO_2 \cdot nH_2O$, a planar silicate skeleton, and a silanol group between layers. Since ilerite is not naturally present, ilerite is prepared through artificial synthesis. Ilerite can be synthesized by, for example, addition of an aqueous mixture of colloidal silica and sodium hydroxide (the ratio by mole of $SiO_2/Na_2O$ is, for example, 4.0) or water glass to a hermetic container, and subsequent hydrothermal reaction at about 90 to 150°C.

Na ions contained in the aforementioned dispersion are released from the layered compound (interlayer spaces) when Na ions present between layers of the layered compound (layered silicate) are exchanged with the quaternary ammonium ions (a). Thus, a large amount of Na ions is present in the dispersion without any treatment of the dispersion. However, Na ions are discharged to the outside of the system by a method described below. In the dispersion, the concentration of Na ions is preferably reduced for preventing re-layering of the exfoliated layer substances. For example, the concentration of Na ions in the dispersion can be adjusted to 1,000 ppm or less, or 100 ppm or less, for example, 0.1 to 1,000 ppm, 1 to 1,000 ppm, 0.1 to 100 ppm, or 1 to 100 ppm.

The aforementioned quaternary ammonium ions play a role as an exfoliation agent for expanding interlayer spaces of the layered compound. Thus, each of the quaternary ammonium ions preferably has a bulky organic group, and preferably exhibits high solubility. Therefore, the present invention involves the use of the quaternary ammonium ions (a) each having a total carbon atom number of 13 to 45, or 13 to 23, or 15 to 45, or 15 to 25 and one or two $C_{10-20}$ alkyl groups.

Examples of the quaternary ammonium ions (a) include hexadecyltrimethylammonium ions, didecyldimethylammonium ions, dimethyldioctadecylammonium ions, and lauryltrimethylammonium ions. In particular, lauryltrimethylammonium ions are preferably used. The counter ions of the ammonium ions are, for example, chloride ions or bromide ions.

The concentration of the quaternary ammonium ions (a) in the dispersion can be adjusted to 30% by mass or less, or 10% by mass or less, 0.001 to 30% by mass, 0.001 to 20% by mass, or 0.001 to 10% by mass.

The anionic surfactant (b) having an ammonium ion is a compound having a hydrophobic group and a hydrophilic group wherein the hydrophilic group is formed of a pair of an anion and an ammonium ion. Basically, the anionic surfactant (b) is preferably a compound containing neither sodium ion nor potassium ion. The anionic surfactant (b) having an ammonium ion is preferably, for example, a compound containing a relatively long-chain alkyl group having a carbon atom number of about 8 to 20 as a hydrophobic group, and is preferably a compound containing no aromatic ring.

Examples of the anionic surfactant (b) having an ammonium ion include ammonium octanoate, ammonium decanoate, ammonium laurate, ammonium stearate, ammonium hexanesulfonate, ammonium octanesulfonate, ammonium decanesulfonate, ammonium dodecanesulfonate, ammonium lauryl sulfate (ammonium dodecyl sulfate), ammonium myristyl sulfate, ammonium lauryl phosphate, and ammonium tripolyphosphate. Of these, ammonium lauryl sulfate (ammonium dodecyl sulfate) is preferably used.

The concentration of the anionic surfactant (b) having an ammonium ion in the dispersion can be adjusted to 0.01 to 20% by mass, or 0.01 to 2% by mass, or 0.001 to 2% by mass.

The present invention involves the use of the quaternary ammonium ions (a) each having one or two $C_{10-20}$ alkyl groups and the anionic surfactant (b) having an ammonium ion as essential components. No addition of the anionic surfactant (b) having an ammonium ion, or the use of an anionic surfactant having a sodium ion instead of an ammonium ion or an anionic surfactant having a potassium ion may cause a problem in that interlayer exfoliation does not proceed, or exfoliated layer substances prepared through interlayer exfoliation are likely to re-form a layered structure, resulting in deterioration of the transparency of the dispersion (i.e., no reduction in the absorbance of the dispersion). No progression of interlayer exfoliation causes insufficient formation of a maze structure for blocking of gas (e.g., water vapor), resulting in unsatisfactory gas barrier property.

However, as described above, the quaternary ammonium ions (a) and the anionic surfactant (b) may impair film formability during formation of a gas barrier film through coating of a base with the gas barrier film-forming composition. Thus, the amounts of these components should be adjusted to fall within optimal ranges. Therefore, the quaternary ammonium ions (a) and the anionic surfactant (b) are removed from the dispersion by the below-described means so as to adjust the amounts of these components to fall within appropriate ranges in a state where the dispersion is formed.

Preferably, the amount of each of the quaternary ammonium ions (a) and the anionic surfactant (b) is more than 0% by mass and 3.0% by mass or less relative to the mass of the plate-like particles (A), or the amount of each of the quaternary ammonium ions (a) and the anionic surfactant (b) is 0.01 to 3.0% by mass relative to the mass of the plate-like particles (A). When the amount of each component exceeds 3.0% by mass, film formability is impaired during formation of a barrier film through coating of a base with the barrier film-forming composition. It is desirable to reduce the amount of each component as much as possible to close to 0% by mass. However, since it takes labor to set the amount to zero, the lower limit may be substantially set to about 0.01% by mass in actual production.

The dispersion of the present invention is characterized by its high transparency. For example, the dispersion exhibits an absorbance of 0.1 or less, in particular, 0.015 or less at an optical path length of 1 cm and a wavelength of 620 nm when the concentration of the plate-like particles is 0.1% by mass.

In the dispersion of the present invention, the layered compound can be generally produced at a concentration of 30% by mass or less.

In the dispersion of the present invention, the dispersion medium (liquid medium) of the plate-like particles (A) may be an aqueous medium such as water, may be an organic solvent, or may be a mixture of water and an organic solvent. When the dispersion of the present invention is produced, the aqueous medium can be replaced with the organic solvent. The solvent replacement can be performed through evaporation or ultrafiltration.

Examples of the aforementioned organic solvent include methanol, ethanol, n-propanol, isopropanol, butanol, diacetone alcohol, propylene glycol, propylene glycol monomethyl ether, propylene glycol monoethyl ether, propylene glycol monobutyl ether, propylene glycol monomethyl ether acetate, propylene glycol monoethyl ether acetate, propylene glycol monopropyl ether acetate, propylene glycol monobutyl ether acetate, toluene, xylene, methyl ethyl ketone, cyclopentanone, cyclohexanone, ethyl 2-hydroxypropionate, ethyl 2-hydroxy-2-methylpropionate, ethyl ethoxyacetate, ethyl hydroxyacetate, methyl 2-hydroxy-3-methylbutanoate, methyl 3-methoxypropinoate, ethyl 3-methoxypropionate, ethyl 3-ethoxypropionate, methyl 3-ethoxypropionate, methyl pyruvate, ethyl pyruvate, ethylene glycol, ethylene glycol monomethyl ether, ethylene glycol monoethyl ether, ethylene glycol monopropyl ether, ethylene glycol monobutyl ether, ethylene glycol monomethyl ether acetate, ethylene glycol mooethyl ether acetate, ethylene glycol monopropyl ether acetate, ethylene glycol monobutyl ether acetate, diethylene glycol dimethyl ether, diethylene glycol diethyl ether, diethylene glycol dipropyl ether, diethylene glycol dibutyl ether, propylene glycol dimethyl ether, propylene glycol diethyl ether, propylene glycol dipropyl ether, propylene glycol dibutyl ether, ethyl lactate, propyl lactate, isopropyl lactate, butyl lactate, isobutyl lactate, methyl formate, ethyl formate, propyl formate, isopropyl formate, butyl formate, isobutyl formate, amyl formate, isoamyl formate, methyl acetate, ethyl acetate, amyl acetate, isoamyl acetate, hexyl acetate, methyl propionate, ethyl propionate, propyl propionate, isopropyl propionate, butyl propionate, isobutyl propionate, methyl butyrate, ethyl butyrate, propyl butyrate, isopropyl butyrate, butyl butyrate, isobutyl butyrate, methyl 3-methoxy-2-methylpropionate, methyl 2-hydroxy-3-methybutyrate, ethyl methoxyacetate, 3-methoxybutyl acetate, 3-methoxypropyl acetate, 3-methyl-3-methoxybutyl acetate, 3-methyl-3-methoxybutyl propionate, 3-methyl-3-methoxybutyl butyrate, methyl acetoacetate, methyl propyl ketone, methyl butyl ketone, 2-heptanone, 3-heptanone, 4-heptanone, N,N-dimethylformamide, N-methylacetamide, N,N-dimethylacetamide, N-methyl-2-pyrrolidone, 4-methyl-2-pentanol, and $\gamma$-butyrolactone. These solvents may be used alone or in combination of two or more species.

For a typical example, there can be used a mixed solvent containing water, an ether solvent such as propylene glycol monomethyl ether, an alcohol solvent such as n-propanol, and a glycol solvent such as ethylene glycol in proportions by mass of 1 : 0.1 to 10: 0.1 to 10: 0.1 to 10.

The present invention is directed to a method for producing a gas barrier film-forming composition, the method comprising the following steps (i) to (vii):

step (i): a step of producing an aqueous dispersion of a layered compound;

step (ii): a step of adding quaternary ammonium ions (a) each having a total carbon atom number of 13 to 45 and one or two $C_{10-20}$ alkyl groups to the aqueous dispersion produced in the step (i) in an amount corresponding to one to 20 times the ion-exchange capacity of the layered compound, and heating the resultant mixture at 40 to 100°C for 1 to 100 hours;

step (iii): a step of adding pure water to the liquid prepared in the step (ii), and removing a sodium-ion-containing liquid to the outside of the system so as to achieve a sodium ion concentration of 1,000 ppm or less in the liquid;

step (iv): a step of dispersing solid matter contained in the product prepared in the step (iii) in an aqueous solution of an anionic surfactant (b) containing ammonium ions at a concentration of 0.01 to 20% by mass, and then adding ammonia to the resultant dispersion so as to adjust the pH of the dispersion to 9.0 to 12.0;

step (v): a step of heating the dispersion prepared in the step (iv) at 40 to 100°C for 1 to 100 hours;

step (vi): a step of obtaining, from the dispersion prepared in the step (v), plate-like particles (A) containing reduced amounts of the quaternary ammonium ions (a) and the anionic surfactant (b); and

step (vii): a step of mixing the plate-like particles (A) obtained in the step (vi) with a water-soluble polymer (B) and an aqueous medium (C).

The aforementioned dispersion containing the plate-like particles (A) is produced through the steps (i) to (vi) described above.

The respective steps will next be described in detail.

The step (i) will now be described by taking as an example the case where the layered compound used in the step is ilerite. Ilerite is a layered compound that is not naturally present, and can be synthesized by, for example, hydrothermal reaction of an aqueous solution of a silicic acid compound at 90 to 150°C. Examples of the silicic acid compound include silicates such as sodium silicate and potassium silicate. The aforementioned aqueous solution of a silicic acid compound is preferably an aqueous sodium silicate solution wherein the ratio by mole of $SiO_2/M_2O$ (wherein M is Na or K) is 3.5 to 4.0, and the concentration of the compound is about 10 to 30% by mass. The hydrothermal reaction condition is 90 to 150°C, particularly preferably 90 to 130°C. Ilerite can be synthesized by allowing the aqueous solution to stand still under heating for one day to 24 days or one day to 12 days.

The solid substance prepared through the hydrothermal reaction can be separated and washed with water, and then dried to thereby recover ilerite. In order to facilitate interlayer exfoliation or dispersion, after separation and washing with water of the solid substance prepared through the hydrothermal reaction, the solid substance can be suspended in water without drying, and can be recovered in the form of aqueous slurry. Although the aqueous solution may be stirred at an early stage of the hydrothermal reaction for homogenizing the reaction system, the aqueous solution is preferably allowed to stand still under heating for particle growth of ilerite.

Fine ilerite can be synthesized by adding ilerite itself in the form of fine seed crystals (seed particles) into an aqueous sodium silicate solution.

When an aqueous dispersion of a layered compound is produced in the step (i) by using a layered substance as a raw material, preferably, the layered substance as a raw material is pulverized as in the case of synthesis of the aforementioned fine ilerite, the pulverized layered substance (as seed particles) is added into an aqueous sodium silicate solution, and the resultant mixture is subjected to hydrothermal treatment at 90 to 130°C for 6 to 72 hours, to thereby produce the layered compound. Unlike the layered substance, the resultant layered compound is a fine layered compound. In addition, an aqueous dispersion of the layered compound can be produced by adjusting the concentration of the fine layered compound to 30% by mass or less.

After the aforementioned hydrothermal treatment, unreacted sodium silicate can be removed from the medium of the hydrothermal reaction, and the powder dried at, for example, 40°C can be dispersed so as to achieve a concentration of 30% by mass or less, to thereby produce the aqueous dispersion of the layered compound in the step (i).

Specifically, the fine layered compound (in particular, ilerite) is produced through the following procedure: the aforementioned aqueous silicate solution, or a suspension prepared by addition of a non-pulverized or pulverized layered substance in the form of seed crystals (seed particles) into the aqueous silicate solution is subjected to hydrothermal reaction while being allowed to stand swill at 90 to 150°C (in particular, at 90 to 130°C) for one day to 24 days, in particular, at 110°C for about one day to 12 days. No particular limitation is imposed on the particle diameter of seed crystals (seed particles) added into an aqueous silicate solution for the production of the fine layered compound. Preferably, the seed crystals (seed particles) are added in an amount of 0.1 to 10% by mass, or 0.1 to 5% by mass, or 0.1 to 2% by mass, relative to the mass of the silicate.

Preferably, the pulverized layered substance (which is added as seed crystals (seed particles)) has a particle diameter of 30 to 60 nm as measured by dynamic light scattering, and a degree of crystallization of 5 to 15% as determined through powder X-ray diffractometry by the formula [(the sum of the integrated intensities of diffraction peaks at $2\theta$ = 6.9 to 8.4°)/(the sum of the integrated intensities of diffraction peaks at $2\theta$ = 5 to 40°)] $\times$ 100.

The (fine) layered compound (in particular, ilerite) prepared through addition of seed crystals (seed particles) and hydrothermal reaction has an average major-axis length of 100 nm to 100,000 nm, a ratio of (maximum major-axis length/width orthogonal to maximum major-axis length) of 1.0 to 10.0, and an average width (nm) orthogonal to the maximum major-axis length (nm) of 50 nm to 100,000 nm, 50 nm to 10,000 nm, or 50 nm to 3,000 nm. The average major-axis length (nm) and the width (nm) orthogonal to the maximum major-axis length (nm) can be measured through observation with a transmission electron microscope.

The average particle diameter of the aforementioned fine layered compound as measured by dynamic light scattering may be 10 nm to 500,000 nm, 20 nm to 300,000 nm, 100 nm to 10,000 nm, or 200 nm to 5,000 nm.

The seed crystals (seed particles) (ilerite in this embodiment) can be prepared through pulverization of the layered substance (ilerite in this embodiment) serving as a raw material. The pulverization can be performed with, for example, a ball mill.

The pulverization is performed with, for example, a planetary ball mill. In the planetary ball mill, the pulverization can be performed by rotation and revolution of a container containing hard balls (e.g., zirconia balls) and ilerite. The pulverization with the planetary ball mill can be performed in two stages (specifically, preliminary pulverization and subsequent fine pulverization), to thereby prepare ilerite in the form of seed crystals (seed particles). The pulverization may be performed in a wet or dry process, but is preferably performed in the dry process.

The aforementioned ilerite used in the form of seed crystals (seed particles) may be separately obtained ilerite. Alternatively, the ilerite may be produced through a continuous batch process by addition of a portion of the previous batch or by use of the residue in a reaction container.

The step (ii) involves adding quaternary ammonium ions (a) each having a total carbon atom number of 13 to 45 and one or two $C_{10-20}$ alkyl groups to the aqueous dispersion of the layered compound produced in the step (i) in an amount corresponding to one to 20 times the ion-exchange capacity of the layered compound, and heating the resultant mixture at 40 to 100°C for one to 100 hours.

The step (iii) involves adding pure water to the liquid prepared in the step (ii), and removing a sodium-ion-containing liquid to the outside of the system so as to achieve a sodium ion concentration of 1,000 ppm or less in the liquid. In the step (ii), sodium ions present between layers of the layered compound are replaced with quaternary ammonium ions, and sodium ions released in the liquid are removed to the outside of the system. Thus, re-replacement with sodium ions is prevented, and the interlayer spaces are expanded with quaternary ammonium ions, to thereby achieve interlayer exfoliation of the layered compound. Examples of the method for removing sodium ions include ultrafiltration, decantation, and solid-liquid separation with a filter.

The step (iv) involves dispersing solid matter contained in the product prepared in the step (iii) in an aqueous solution of an anionic surfactant (b) containing ammonium ions at a concentration of 0.01 to 20% by mass, and then adding ammonia to the resultant dispersion so as to adjust the pH of the dispersion to 9.0 to 12.0. When the anionic surfactant (b) having an ammonium ion is added, exfoliated layer substances generated through interlayer exfoliation are coated with the anionic surfactant, or the anionic surfactant (b) intervenes between the exfoliated layer substances, to thereby prevent re-formation of a layered compound from exfoliated layer substances generated through interlayer exfoliation in the subsequent step (v).

The step (iv) may be performed under ultrasonic irradiation or with stirring for sufficient coating of the surface of the exfoliated layer substances (ilerite in this embodiment) with the anionic surfactant (b) having an ammonium ion.

The step (v) involves heating the liquid prepared in the step (iv) at 40 to 100°C for one to 100 hours.

The step (vi) involves obtaining, from the dispersion prepared in the step (v), plate-like particles (A) containing reduced amounts of the quaternary ammonium ions (a) and the anionic surfactant (b). In this case, the amount of each of the quaternary ammonium ions (a) and the anionic surfactant (b) can be reduced to fall within a range of more than 0% by mass to 3.0% by mass or less, or a range of 0.01 to 3.0% by mass relative to the mass of the plate-like particles (A).

The step (vi) involves obtaining the plate-like particles (A) containing reduced amounts of the quaternary ammonium ions (a) and the anionic surfactant (b) by the following step (vi-1), (vi-2), or (vi-3), or any combination of these.

Step (vi-1): a step of centrifuging the dispersion of the plate-like particles (A) at a centrifugal acceleration of 3,000 to 100,000 G, to thereby yield the plate-like particles (A). The dispersion prepared in the step (v) is added to a centrifuge tube, and centrifugation is performed for about 0.1 to 5 hours, to thereby precipitate the plate-like particles (A). Subsequently, the resultant supernatant can be removed to thereby reduce the amounts of the quaternary ammonium ions (a) and the anionic surfactant (b) contained in the dispersion. In addition, pure water is added to the precipitate, and the mixture is subjected to dispersion treatment with ultrasonic treatment, etc., and then centrifugation and removal of the supernatant are repeated again. This process may be performed once or about twice to 10 times as a whole. This process may be repeatedly performed until the ratio by mass of each of the quaternary ammonium ions (a) and the anionic surfactant (b) to the plate-like particles (A) falls within an appropriate range.

Step (vi-2): a step of precipitating the plate-like particles (A) by addition of a hydrophilic organic solvent to the dispersion of the plate-like particles (A), followed by solid-liquid separation.

Step (vi-3): a step of separating the plate-like particles (A) by filtration of the dispersion of the plate-like particles (A) with a filter or ultrafiltration of the dispersion.

The step (vi) may further be followed by (vii-1):

step (vii-1): a step of mixing the plate-like particles (A) obtained in the step (vi) with an alkali component and the aqueous medium (C) to thereby adjust the pH of the resultant mixture to 8.0 to 12.0, and then subjecting the mixture to dispersion treatment to thereby prepare a dispersion of the plate-like particles (A).

A step of replacing the solvent of the aqueous dispersion prepared in the step (vii-1) with an organic solvent, may further be included. This step produces a dispersion (sol) wherein the plate-like particles prepared from the layered compound (ilerite) through interlayer exfoliation are dispersed in an organic solvent.

The thus-produced dispersion of the present invention exhibits high dispersibility, and dispersion stability (for example, no precipitation occurs even after the elapse of six months at room temperature).

Step (vii): the plate-like particles (A) prepared in the step (vi) or the dispersion containing the plate-like particles (A) prepared in the step (vii-1) can be mixed with the water-soluble polymer (B) and the aqueous medium (C).

The aqueous medium (C) may be an aqueous medium contained in the dispersion containing the plate-like particles (A).

The water-soluble polymer (B) may be a polymer having a monomer unit structure containing a hydroxyl group or a carboxyl group in the entire polymer unit structure, wherein the proportion of the monomer unit structure is 30 mol% to 100 mol% or 50 mol% to 100 mol%. When the water-soluble polymer (B) is a copolymer, the copolymer may be a block copolymer or a random copolymer. The water-soluble polymer (B) may be, for example, an ethylene-vinyl alcohol copolymer (EVOH), polyvinyl alcohol (PVA), polyacrylic acid (PAA) or a copolymer thereof, or a mixture of any of these. Such a water-soluble polymer may be a commercially available product. Examples of the commercial product of EVOH include Poval (registered trademark) available from KURARAY CO., LTD. and Soarnol (registered trademark) available from Mitsubishi Chemical Corporation; examples of the commercial product of PVA include Kuraray Poval (registered trademark) available from KURARAY CO., LTD. and J-Poval (registered trademark) available from JAPAN VAM & POVAL CO., LTD.; and examples of the commercial product of PAA or a copolymer thereof include Aqualic (registered trademark) available from NIPPON SHOKUBAI CO., LTD. Such a water-soluble polymer may be used in the form of, for example, a solution prepared by dissolving it in a mixed solvent of water and alcohol at a concentration of about 1 to 30% by mass. The mixed solvent may be an aqueous solvent wherein the ratio by mass of water : alcohol is 1 : 0.1 to 100, or 1 : 0.1 to 10, or 1 : 0.1 to 1. Examples of the alcohol include methanol, ethanol, n-propanol, and isopropanol. When the water-soluble polymer is EVOH, a solution where EVOH is dissolved in the aforementioned solvent may be used. Examples of the commercial product of such a solution include Eversorb #10 available from Nihon Cima Co., Ltd.

The gas barrier film-forming composition may contain the aforementioned component (A) in an amount of 0.1 to 10% by mass and the component (B) in an amount of 0.1 to 10% by mass.

The composition may further contain an alkali component and may have a pH of 8.0 to 12.0. The alkali component may be, for example, ammonia, a primary alkylamine, a secondary alkylamine, a tertiary alkylamine, or a quaternary alkylammonium hydroxide. Examples of such amines and quaternary alkylammonium hydroxide include primary amines, such as methylamine, ethylamine, n-propylamine, isopropylamine, and n-butylamine; secondary amines, such as dimethylamine, diethylamine, di-n-propylamine, diisopropylamine, and di-n-butylamine; tertiary amines, such as trimethylamine, triethylamine, tri-n-propylamine, and tri-n-butylamine; and quaternary ammonium hydroxides, such as tetramethylammonium hydroxide, trimethylethylammonium hydroxide, dimethyldiethylammonium hydroxide, methyltriethylammonium hydroxide, tetraethylammonium hydroxide, tetra-n-propylammonium hydroxide, and tetra-n-butylammonium hydroxide.

The gas barrier film-forming composition of the present invention can be applied to the surface of a base, to thereby form a gas barrier film on the surface of the base. Thus, a formed product including the base and the gas barrier film can be produced.

The gas barrier film-forming composition may have a solid content of, for example, 0.1 to 30% by mass, or 0.2 to 20% by mass. The term "solid content" as used herein refers to all components (except for the liquid medium, such as water or organic solvent) contained in the gas barrier film-forming composition.

When the gas barrier film-forming composition is applied to a base, the viscosity of the composition may be controlled for regulating the thickness of the resultant coating film. The viscosity of the composition may be adjusted to 1 to 1,000 mPa·s, or 1 to 100 mPa·s.

Examples of the base include polyethylene terephthalate, polyethylene, polypropylene, polyamide, nylon, polylactic acid, polyvinyl chloride, and polyvinyl dichloride.

The aforementioned composition is applied by, for example, roll coating, spray coating, ink jetting, spin coating, bar coating, slit coating, or dipping. When, for example, the composition is applied by spin coating, the spin coating is performed at a rotation speed of 700 to 2,000 rpm for 5 to 50 seconds. After application of the composition to the base, the solvent may be removed at ambient pressure or under reduced pressure.

The composition-applied base is heated at a temperature of 30 to 200°C, or 40 to 190°C, or 50 to 180°C, to thereby form a gas barrier film and to produce a formed product. The heating temperature may be appropriately determined depending on the heatproof temperature of the base to which the composition is applied. The heating may be performed for about 0.01 to 1 hour.

The resultant formed product may have, on the surface thereof, a gas barrier film having a thickness of 50 nm to 50 $\mu$m, or 50 nm to 30 $\mu$m.

In the resultant gas barrier film, the value obtained by multiplying water vapor transmission rate (g/m$^2$/day) by thickness ($\mu$m) is 0.001 to 20 g/m$^2$/day $\times$ $\mu$m.

The gas barrier film formed on the base exhibits high transparency. When, for example, the gas barrier film formed has a thickness of 700 nm, the resultant transparent base exhibits a total light transmittance of 80% or more, generally 85% or more or 90% or more.

In the case where the gas barrier film-forming composition of the present invention is used, when, for example, the total light transmittance of the base is taken as 100 before formation of a gas barrier film, a rate of reduction in total light transmittance of the base can be decreased to less than 20% or even less than 10% after formation of a gas barrier film.

The gas barrier film of the present invention is a film capable of blocking gases harmful to the base, such as water vapor, active oxygen, or sulfur-containing gas. For example, a gas barrier film for blocking water vapor can be effectively formed.

The base to which the gas barrier film-forming composition of the present invention is applied has a HAZE (haze value) of 10 to 50%, or 15 to 50%, or 15 to 40%.

Examples of the article to which the gas barrier film-forming composition of the present invention is applied include a display, an LCD surface, an optical lens, an eyeglass lens, a surface base for a solar battery, a cellular phone, an organic EL emission member, an illumination lamp, a windowpane for construction, an agricultural film, a film for foods, and a transparent member for a vehicle.

Examples

(Conditions for Quantification of Quaternary Ammonium Ions and Anionic Surfactant: HPLC)
HPLC apparatus: Ultimate 300 (available from Thermo Fisher Scientific, Inc.)
Detector: Corona Veo (available from Thermo Fisher Scientific, Inc., charged particles)
Column: Acclaim Surfactant Plus 3 $\mu$m 3.0 $\times$ 150 mm (available from Thermo Fisher Scientific, Inc.)
Measurement conditions:

Column temperature: 30°C
Eluent: acetonitrile/0.1M ammonium acetate
Flow rate: 0.6 mL/min
Standard solution for calibration curve: 40 vol% acetonitrile/water mixed solution (10, 50, 100, 200 ppm)

Preparation of sample solution: A sample solution was prepared by appropriately diluting a sample with a 40 vol% acetonitrile/water mixed solution so that the concentrations of quaternary ammonium ions and an anionic surfactant fell within calibration curve ranges during measurement.

(Synthesis Example 1: Synthesis of Ilerite)

A 3-L stainless steel (SUS316)-made hermetic container was charged with water glass (the proportions by mole of $SiO_2$ : $Na_2O$ : $H_2O$ = 3.8 : 1 : 39.0, $SiO_2$ concentration: 23.05% by mass, $Na_2O$ concentration: 6.25% by mass) wherein the proportions by mole were adjusted by adding ST-O (trade name, available from Nissan Chemical Corporation) to commercially available sodium silicate ($Na_2O/SiO_2$ molar ratio of 3-3.3), and the container was allowed to stand still under heating at 110°C for 12 days, to thereby hydrothermally synthesize ilerite. The resultant product was identified as ilerite by XRD (PDF card No. 00-048-0655).

Subsequently, 22.2 g of the resultant ilerite and 811.1 g of zirconia-made pulverizing balls having a diameter of 5 mm were added to a silicon nitride-made container (volume: 500 mL) of a planetary ball mill (PM100, available from Verder Scientific Co., Ltd.), and dry pulverization was performed in an air atmosphere at a rotation speed of 160 rpm for one hour. Thereafter, the pulverizing balls having a diameter of 5 mm were replaced with 811.1 g of zirconia-made pulverizing balls having a diameter of 3 mm, and then dry pulverization was performed in an air atmosphere at a rotation speed of 220 rpm for one hour.

Subsequently, 24.0 g of the resultant pulverized ilerite particles, serving as seed crystals (seed particles), were added to 2,376.0 g of water glass (the proportions by mole of $SiO_2$ : $Na_2O$ : $H_2O$ = 4.0 : 1 : 39.0, $SiO_2$ concentration: 23.85% by mass, $Na_2O$ concentration: 6.12% by mass) wherein the proportions by mole were adjusted by adding ST-O (trade name, available from Nissan Chemical Corporation) to commercially available sodium silicate No. 3. The resultant mixture was placed in a SUS316-made hermetic container, and the container was heated at 120°C for 24 hours, to thereby yield ilerite nanoparticles having a number median diameter of 832.8 nm as measured by dynamic light scattering. The resultant ilerite was found to have an average major-axis length of 845.0 nm, a width orthogonal to the maximum major-axis length of 686.6 nm, an average thickness of 38.1 nm, and a ratio of (maximum major-axis length/width orthogonal to maximum major-axis length) of 1.2. The resultant product was identified as ilerite by XRD (PDF card No. 00-048-0655).

(Synthesis Example 2: Production of Ilerite Nanosheet Aqueous Dispersion)

Firstly, 0.8 g of the ilerite nanoparticles prepared in Synthesis Example 1 and 0.96 g of lauryltrimethylammonium chloride were added to 78.2 g of water, and the resultant mixture was allowed to stand still under heating at 100°C for 24 hours, to thereby replace sodium ions between silicate layers of the ilerite with lauryltrimethylammonium ions (lauryltrimethylammonium ion concentration: 1.1% by mass). The sodium ions were removed to the outside of the system through filtration with a membrane filter, and then the resultant wet powder was recovered and dispersed in water again, to thereby yield an ion-exchanged ilerite aqueous dispersion.

Subsequently, 20 g of the ion-exchanged ilerite aqueous dispersion was added to an ammonium dodecyl sulfate solution so that the total mass was 30 g (ilerite nanosheet concentration in terms of H type: 1.1% by mass, ammonium dodecyl sulfate concentration: 1.50% by mass). Aqueous ammonia was added to the resultant mixture to thereby adjust the pH of the mixture to 10.1. The resultant solution was heated with stirring (with a stirrer) at 60°C for 24 hours, to thereby yield a colloidal solution containing ilerite nanosheets (plate-like particles) obtained through interlayer exfoliation of the ilerite nanoparticles (ilerite nanosheet aqueous dispersion) (ammonium dodecyl sulfate concentration determined by HPLC: 1.50% by mass, lauryltrimethylammonium ion concentration determined by HPLC: 0.62% by mass).

(Measurement of Diameter (by Dynamic Light Scattering), Average Major-Axis Length, Width (Minor-Axis Length) Orthogonal to Maximum Major-Axis Length, and Average Thickness of Ilerite Nanosheets in Ilerite Nanosheet Aqueous Dispersion Prepared in Synthesis Example 2)

The ilerite nanosheet aqueous dispersion prepared in Synthesis Example 2 was found to have a number median diameter of 653.5 nm as measured by dynamic light scattering. The average major-axis length was 853.0 nm, the width orthogonal to the maximum major-axis length was 648.2 nm, the average thickness was 25.8 nm, and the ratio of (maximum major-axis length/width orthogonal to maximum major-axis length) was 1.3.

(Synthesis Example 3: Removal of Surfactant from Ilerite Nanosheet Aqueous Dispersion by Centrifugation)

Firstly, 30 g of the ilerite nanosheet aqueous dispersion prepared in Synthesis Example 2 was added to a 40-mL centrifuge tube, and the aqueous dispersion was subjected to centrifugation treatment at 40,000 G for one hour, to thereby precipitate exfoliated ilerite nanosheets. The supernatant was eliminated so as to remove ammonium dodecyl sulfate and lauryltrimethylammonium ions contained in the supernatant, and aqueous ammonia was added in an equal amount of the eliminated supernatant. The resultant mixture was subjected to ultrasonic treatment for redispersion, to thereby yield an aqueous dispersion of ilerite nanosheets (plate-like particles). Subsequently, 30 g of the resultant ilerite nanosheet aqueous dispersion was added to a 40-mL centrifuge tube, and the aqueous dispersion was again subjected to centrifugation treatment at 40,000 G for one hour, to thereby precipitate exfoliated ilerite nanosheets. The supernatant was eliminated so as to remove ammonium dodecyl sulfate and lauryltrimethylammonium ions contained in the supernatant, and a predetermined amount of aqueous ammonia was added. The resultant mixture was subjected to ultrasonic treatment for redispersion, to thereby yield an ilerite nanosheet aqueous dispersion (1) (pH: 10.1). The ilerite nanosheet aqueous dispersion (1) was found to contain ilerite nanosheets at a concentration of 3.0% by mass in terms of H type. The ammonium dodecyl sulfate concentration was less than 0.01% by mass as measured by HPLC (below the lower limit of measurement), and the lauryltrimethylammonium ion concentration was less than 0.01% by mass as measured by HPLC (below the lower limit of measurement).

(Measurement of Diameter (by Dynamic Light Scattering), Average Major-Axis Length, Width (Minor-Axis Length) Orthogonal to Maximum Major-Axis Length, and Average Thickness of Ilerite Nanosheets in Ilerite Nanosheet Aqueous Dispersion (1) Prepared in Synthesis Example 3)

The ilerite nanosheet aqueous dispersion (1) prepared in Synthesis Example 3 was found to have a number median diameter of 608.3 nm as measured by dynamic light scattering. The average major-axis length was 858.0 nm, the width orthogonal to the maximum major-axis length was 650.5 nm, the average thickness was 21.3 nm, and the ratio of (maximum major-axis length/width orthogonal to maximum major-axis length) was 1.3.

(Synthesis Example 4: Addition of n-Propanol, Removal of Surfactant by Solid-Liquid Separation)

Firstly, 30 g of the ilerite nanosheet aqueous dispersion prepared in Synthesis Example 2 (ammonium dodecyl sulfate concentration determined by HPLC: 1.50% by mass, lauryltrimethylammonium ion concentration determined by HPLC: 0.62% by mass) was added by and mixed with an equal mass (30 g) of n-propanol, and the mixture was allowed to stand still at room temperature for one day. The resultant precipitate was filtered with a membrane filter for solid-liquid separation, to thereby remove the surfactant contained in the supernatant. A predetermined amount of aqueous ammonia was added to the precipitate recovered by filtration, and the mixture was subjected to ultrasonic treatment for redispersion, to thereby yield an ilerite nanosheet aqueous dispersion (2). The ilerite nanosheet aqueous dispersion (2) was found to contain ilerite nanosheets at a concentration of 3.0% by mass in terms of H type. The ammonium dodecyl sulfate concentration was 0.048% by mass as measured by HPLC, and the lauryltrimethylammonium ion concentration was 0.038% by mass as measured by HPLC.

(Measurement of Diameter (by Dynamic Light Scattering), Average Major-Axis Length, Width (Minor-Axis Length) Orthogonal to Maximum Major-Axis Length, and Average Thickness of Ilerite Nanosheets in Ilerite Nanosheet Aqueous Dispersion (2) Prepared in Synthesis Example 4)

The ilerite nanosheet aqueous dispersion (2) prepared in Synthesis Example 4 was found to have a number median diameter of 673.0 nm as measured by dynamic light scattering. The average major-axis length was 852.6 nm, the width orthogonal to the maximum major-axis length was 654.3 nm, the average thickness was 25.9 nm, and the ratio of (maximum major-axis length/width orthogonal to maximum major-axis length) was 1.3.

(Synthesis Example 5: Production of Ilerite Nanosheet Aqueous Dispersion)

Firstly, 0.8 g of the ilerite nanoparticles prepared in Synthesis Example 1 and 1.92 g of dioctadecyldimethylammonium chloride were added to 77.3 g of water, and the resultant mixture was allowed to stand still under heating at 100°C for 24 hours, to thereby replace sodium ions between silicate layers of the ilerite with dioctadecyldimethylammonium ions (dioctadecyldimethylammonium ion concentration: 2.3% by mass). The Na ions were removed to the outside of the system through filtration with a membrane filter, and then the resultant wet powder was recovered and dispersed in water again, to thereby yield an ion-exchanged ilerite aqueous dispersion.

Subsequently, 20 g of the ion-exchanged ilerite aqueous dispersion was added to an ammonium dodecyl sulfate solution so that the total mass was 30 g (ilerite nanosheet concentration in terms of H type: 0.1% by mass, ammonium dodecyl sulfate concentration: 0.5% by mass). Aqueous ammonia was added to the resultant mixture to thereby adjust the pH of the mixture to 10.1. The resultant solution was subjected to mixing with a mix rotor at room temperature for one hour, to thereby yield a colloidal solution containing ilerite nanosheets (plate-like particles) obtained through interlayer exfoliation of the ilerite nanoparticles (ilerite nanosheet aqueous dispersion) (ammonium dodecyl sulfate concentration determined by HPLC: 0.43% by mass, dioctadecyldimethylammonium ion concentration determined by HPLC: 0.25% by mass).

(Synthesis Example 6: Removal of Surfactant from Ilerite Nanosheet Aqueous Dispersion by Centrifugation)

Firstly, 30 g of the ilerite nanosheet aqueous dispersion prepared in Synthesis Example 5 was added to a 40-mL centrifuge tube, and the aqueous dispersion was subjected to centrifugation treatment at 40,000 G for one hour, to thereby precipitate exfoliated ilerite nanosheets. The supernatant was eliminated so as to remove ammonium dodecyl sulfate and dioctadecyldimethylammonium ions contained in the supernatant, and aqueous ammonia was added in an equal amount of the eliminated supernatant. The resultant mixture was subjected to ultrasonic treatment for redispersion, to thereby yield an aqueous dispersion of ilerite nanosheets (plate-like particles). Subsequently, 30 g of the resultant ilerite nanosheet aqueous dispersion was added to a 40-mL centrifuge tube, and the aqueous dispersion was again subjected to centrifugation treatment at 40,000 G for one hour, to thereby precipitate exfoliated ilerite nanosheets. The supernatant was eliminated so as to remove ammonium dodecyl sulfate and dioctadecyldimethylammonium ions contained in the supernatant, and a predetermined amount of aqueous ammonia was added. The resultant mixture was subjected to ultrasonic treatment for redispersion, to thereby yield an ilerite nanosheet aqueous dispersion (3) (pH: 10.1). The ilerite nanosheet aqueous dispersion (3) was found to contain ilerite nanosheets at a concentration of 3.0% by mass in terms of H type. The ammonium dodecyl sulfate concentration was less than 0.01% by mass as measured by HPLC (below the lower limit of measurement), and the dioctadecyldimethylammonium ion concentration was less than 0.01% by mass as measured by HPLC (below the lower limit of measurement).

(Measurement of Diameter (by Dynamic Light Scattering), Average Major-Axis Length, Width (Minor-Axis Length) Orthogonal to Maximum Major-Axis Length, and Average Thickness of Ilerite Nanosheets in Ilerite Nanosheet Aqueous Dispersion (3) Prepared in Synthesis Example 6)

The ilerite nanosheet aqueous dispersion (3) prepared in Synthesis Example 6 was found to have a number median diameter of 668.5 nm as measured by dynamic light scattering. The average major-axis length was 614.2 nm, the width orthogonal to the maximum major-axis length was 361.4 nm, the average thickness was 15.4 nm, and the ratio of (maximum major-axis length/width orthogonal to maximum major-axis length) was 1.7.

[Example 1]

(Preparation of Gas Barrier Film-Forming Composition (1) with Ilerite Nanosheet Aqueous Dispersion (1))

Firstly, 2.0 g of the ilerite nanosheet (plate-like particle) aqueous dispersion (1) prepared in Synthesis Example 3 (ilerite nanosheet concentration in terms of H type: 3.0% by mass) was added to a 20-mL glass container containing a mixed solvent of 1.9 g of propylene glycol monomethyl ether (PGME), 0.45 g of n-propanol, and 0.45 g of ethylene glycol, and the resultant mixture was stirred with a stirrer, to thereby prepare an ilerite nanosheet mixed solvent dispersion (ilerite nanosheet concentration in terms of H type: 1.25% by mass, proportions by mass of water/PGME/n-propanol/ethylene glycol: 4/4/1/1). To the dispersion was added 1.2 g of a solution of ethylene-vinyl alcohol copolymer (EVOH) (i.e., water-soluble resin) in a water/alcohol mixture (Eversorb #10 available from Nihon Cima Co., Ltd., EVOH concentration: 10% by mass, ethylene unit contained in the total constituent unit: 29 to 47% by mole, proportions by mass of water/n-propanol/ethanol: 50/45/5), and the resultant mixture was stirred with a stirrer, to thereby prepare a gas barrier film-forming composition (1) containing the ilerite nanosheets. The total solid content concentration was 3.0% by mass, and the amount of the ilerite nanosheets relative to EVOH was 50 phr.

(Preparation of Gas Barrier Film (1) Containing Ilerite Nanosheets)

An A4-size PET film having a thickness of 25 μm (Lumirror (registered trademark) film #25-T60, available from Toray Industries, Inc.) was subjected to UV-O3 treatment with a UV ozone cleaner (MODEL UV-312, available from Technovision, Inc.) for five minutes. Thereafter, the PET film was cut into a base having a width of 99 mm and a length of 210 mm. The base was placed in a tabletop wire bar coater (PM-9050MC, available from SMT Co., Ltd.) so that the UV-O3-treated surface was to become a coating surface. Subsequently, 1.0 to 1.5 mL of the above-prepared gas barrier film-forming composition (1) was added dropwise to an end portion of the base, and then the composition was uniformly developed and spread on the base with No. 12 wire bar (Wet thickness: 30.4 $\mu$m) at a rate of 2.0 m/min. Thereafter, the base coated with the gas barrier film-forming composition was baked on a hot plate set at 80°C for five minutes, and then baked in an oven set at 80°C for five minutes, to thereby remove the solvent. The same operation (application and drying) was additionally performed twice (total: three times) for increasing the film thickness, and finally baked in an oven set at 150°C for 10 minutes, to thereby prepare a gas barrier film (1) having a thickness of 0.7 $\mu$m on the base.

(Evaluation of Transparency of Gas Barrier Film (1) Containing Ilerite Nanosheets)

The total light transmittance and HAZE (haze value) of the above-prepared gas barrier film (1) including the base were measured with a turbidimeter (NDH 5000, available from NIPPON DENSHOKU INDUSTRIES CO., LTD.) according to JIS Standard (JIS K 7361-1, JIS K 7136, and JIS K 7105). As a result, the total light transmittance was 90%, and the HAZE was 30%.

(Evaluation of Water Vapor Barrier Property of Gas Barrier Film (1) Containing Ilerite Nanosheets)

A screw-type moisture-permeable cup (IMC-152, available from Imoto Machinery Co., Ltd., permeation size: $\phi$30 mm, depth: 15 mm) was charged with 7.0 to 8.0 g of calcium chloride for moisture measurement (available from KANTO CHEMICAL CO., INC.). The above-prepared gas barrier film (1) was cut into a piece having a size larger than the permeation size, and the cut piece was attached to the cup so that the coating surface faced calcium chloride (downward). The attached cut piece was screwed with a gasket and an upper ring, to thereby prepare a measurement sample. The mass of the measurement sample was measured, and then the measurement sample was placed in a thermohygrostat (SH-222, available from ESPEC Corp.) set at a temperature of 40°C and a humidity of 90%RH. The measurement sample was removed every predetermined time (24 hours in principle), and the mass of the sample was measured. This operation was repeated (about 10 times), and the water vapor transmission rate (WVTR) was calculated by the following formula. As a result, the averaged water vapor transmission rate was 12 g/m$^2$/day.

$$\text{Water vapor transmission rate (WVTR, g/m}^2\text{/day)} = 24 \times M/T \cdot S$$

S: permeation size (m$^2$)
T: the interval between the last two mass measurement operations in the test (24 hours in principle)
M: the total of an increase in mass (g) between the last two mass measurement operations in the test
Separately, a cross section of the gas barrier film (1) was observed with an SEM (JSM 7400F, available from JEOL Ltd.), to thereby determine the thickness ($\mu$m) of the gas barrier film (exclusive of the base). The thickness was 0.7 $\mu$m. The value obtained by multiplying the above-calculated water vapor transmission rate by the thickness was used as an index of water vapor barrier property per $\mu$m. As a result, the index of water vapor barrier property per $\mu$m was 9 g/m$^2$/day $\times$ $\mu$m.

[Example 2]

(Preparation of Gas Barrier Film-Forming Composition (2) with Ilerite Nanosheet Aqueous Dispersion (2))

A gas barrier film-forming composition (2) containing ilerite nanosheets was prepared in the same manner as in Example 1, except that the ilerite nanosheet aqueous dispersion (2) prepared in Synthesis Example 4 was used. The total solid content concentration was 3.0% by mass, and the amount of the ilerite nanosheets relative to EVOH was 50 phr.

(Preparation and Evaluation of Gas Barrier Film (2) Containing Ilerite Nanosheet Aqueous Dispersion (2))

A gas barrier film (2) containing the ilerite nanosheet aqueous dispersion (2) was prepared in the same manner as in Example 1, except that the above-prepared gas barrier film-forming composition (2) was used. The total light transmittance and HAZE of the gas barrier film (2) were measured in the same manner as in Example 1. As a result, the total light transmittance was 90%, and the HAZE was 30%. The water vapor transmission rate, thickness, and index of water vapor barrier property per $\mu$m of the gas barrier film (2) were determined in the same manner as in Example 1. As a result, the water vapor transmission rate was 12 g/m$^2$/day, the thickness was 0.9 $\mu$m, and the index of water vapor barrier property per $\mu$m was 11 g/m$^2$/day $\times$ $\mu$m.

[Example 3]

(Preparation of Gas Barrier Film-Forming Composition (3) with Ilerite Nanosheet Aqueous Dispersion (3))

A gas barrier film-forming composition (3) containing ilerite nanosheets was prepared in the same manner as in Example 1, except that the ilerite nanosheet aqueous dispersion (3) prepared in Synthesis Example 6 was used. The total solid content concentration was 3.0% by mass, and the amount of the ilerite nanosheets relative to EVOH was 50 phr.

(Preparation and Evaluation of Gas Barrier Film (3) Containing Ilerite Nanosheet Aqueous Dispersion (3))

A gas barrier film (3) containing the ilerite nanosheet aqueous dispersion (3) was prepared in the same manner as in Example 1, except that the above-prepared gas barrier film-forming composition (3) was used. The total light transmittance and HAZE of the gas barrier film (3) were measured in the same manner as in Example 1. As a result, the total light transmittance was 90%, and the HAZE was 25%. The water vapor transmission rate, thickness, and index of water vapor barrier property per $\mu$m of the gas barrier film (3) were determined in the same manner as in Example 1. As a result, the water vapor transmission rate was 11 g/m$^2$/day, the thickness was 0.9 $\mu$m, and the index of water vapor barrier property per $\mu$m was 10 g/m$^2$/day $\times$ $\mu$m.

[Comparative Example 1]

(Preparation of Gas Barrier Film-Forming Composition (4) Containing Only EVOH Resin)

Firstly, 1.8 g of a solution of ethylene-vinyl alcohol copolymer (EVOH) (i.e., water-soluble resin) in a water/alcohol mixture was added to a 20-mL glass container containing a mixed solvent of 2.6 g of water, 2.6 g of PGME, 0.52 g of n-propanol, and 0.52 g of ethylene glycol, and the resultant mixture was stirred with a stirrer, to thereby prepare a gas barrier film-forming composition (4) containing only the EVOH resin. The total solid content concentration was 3.0% by mass, and the amount of ilerite nanosheets relative to EVOH was 0 phr.

(Preparation and Evaluation of EVOH Gas Barrier Film (4))

An EVOH gas barrier film (4) was prepared in the same manner as in Example 1, except that the above-prepared gas barrier film-forming composition (4) containing only the EVOH resin was used. The total light transmittance and HAZE of the EVOH gas barrier film (4) were measured in the same manner as in Example 1. As a result, the total light transmittance was 89%, and the HAZE was 11%. The water vapor transmission rate, thickness, and index of water vapor barrier property per $\mu$m of the gas barrier film (4) were determined in the same manner as in Example 1. As a result, the water vapor transmission rate was 14 g/m$^2$/day, the thickness was 0.9 $\mu$m, and the index of water vapor barrier property per $\mu$m was 13 g/m$^2$/day $\times$ $\mu$m.

[Comparative Example 2]

(Preparation of Gas Barrier Film-Forming Composition (5) Containing Kunipia M (Trade Name))

Firstly, 0.06 g of commercially available smectite powder particles (trade name: Kunipia-M, available from KUNIMINE INDUSTRIES CO., LTD.) was weighed in a 20-mL glass container, and 1.89 g of water, 1.89 g of PGME, 0.48 g of n-propanol, and 0.48 g of ethylene glycol were added to and mixed with the particles, to thereby prepare a dispersion of the smectite particles in the mixed solvent (smectite particle concentration: 1.25% by mass, proportions by mass of water/PGME/n-propanol/ethylene glycol: 4/4/1/1). To the resultant dispersion of the smectite particles in the mixed solvent was added 1.2 g of a solution of ethylene-vinyl alcohol copolymer (EVOH) (i.e., water-soluble resin) in a water/alcohol mixture, and the resultant mixture was stirred with a stirrer, to thereby prepare a gas barrier film-forming composition (5) containing the smectite particles. The total solid content concentration was 3.0% by mass, and the amount of the smectite particles relative to EVOH was 50 phr.

(Preparation and Evaluation of Gas Barrier Film (5) Containing Kunipia M (Trade Name))

A gas barrier film (5) containing the smectite particles was prepared in the same manner as in Example 1, except that the above-prepared gas barrier film-forming composition (5) containing the smectite particles was used. The total light transmittance and HAZE of the gas barrier film (5) containing the smectite particles were measured in the same manner as in Example 1. As a result, the total light transmittance was 90%, and the HAZE was 57%. The water vapor transmission rate, thickness, and index of water vapor barrier property per $\mu$m of the gas barrier film (5) were determined in the same manner as in Example 1. As a result, the water vapor transmission rate was 8 g/m$^2$/day, the thickness was 1.2 $\mu$m, and the index of water vapor barrier property per $\mu$m was 10 g/m$^2$/day $\times$ $\mu$m.

[Comparative Example 3]

(Preparation of Gas Barrier Film-Forming Composition (6) Containing Ilerite Nanosheet Aqueous Dispersion of Synthesis Example 2)

A gas barrier film-forming composition (6) containing ilerite nanosheets without removal of the surfactant was prepared in the same manner as in Example 1, except that the ilerite nanosheet aqueous dispersion prepared in Synthesis Example 2 before removal of the surfactant (ilerite nanosheet concentration in terms of H type: 3.0% by mass, ammonium dodecyl sulfate concentration: 1.50% by mass, lauryltrimethylammonium ion concentration: 0.62% by mass) was used. The total solid content concentration was 3.0% by mass, and the amount of the ilerite nanosheets relative to EVOH was 50 phr.

(Preparation and Evaluation of Gas Barrier Film (6) Containing Ilerite Nanosheet Aqueous Dispersion of Synthesis Example 2)

A gas barrier film (6) containing the ilerite nanosheets was prepared in the same manner as in Example 1, except that the above-prepared gas barrier film-forming composition (6) containing ilerite nanosheets without removal of the surfactant was used. However, considerable repellence from a PET base was observed, and a homogeneous film failed to be formed. Thus, the resultant film was not evaluated as a gas barrier film.

Table 1

| | Example 1 | Example 2 | Example 3 | Comparative Example 1 | Comparative Example 2 | Comparative Example 3 |
|---|---|---|---|---|---|---|
| Amount of plate-like particles (phr) | 50 | 50 | 50 | 0 | 50 | 50 |
| Total light transmittance (%) | 90 | 90 | 90 | 89 | 90 | Not measured |
| HAZE (%) | 30 | 30 | 25 | 11 | 57 | Not measured |
| Water vapor transmission rate (g/m$^2$/dav) | 12 | 12 | 11 | 14 | 8 | Not measured |
| Thickness ($\mu$m) | 0.7 | 0.9 | 0.9 | 0.9 | 1.2 | Not measured |
| Index of water vapor barrier property per $\mu$m (g/m$^2$/day $\times$ $\mu$m) | 9 | 11 | 10 | 13 | 10 | Not measured |

As is clear from Table 1, the water vapor transmission rate and the index of water vapor barrier property per $\mu$m are lower in the gas barrier film containing ilerite nanosheets (plate-like particles) (Example 1) than in the EVOH gas barrier film (Comparative Example 1), and in particular, the gas barrier film of Example 1 exhibits superior gas barrier property; i.e., the value obtained by multiplying the water vapor transmission rate (g/m$^2$/day) by the thickness ($\mu$m) (index of water vapor barrier property per $\mu$m) is 10 g/m$^2$/day $\times$ $\mu$m or less.

In Examples 2 and 3, the HAZE was 10 to 50, preferably 15 to 50. In Examples 1 to 3, the value obtained by multiplying the water vapor transmission rate (g/m$^2$/day) by the thickness ($\mu$m) falls within a range of 0.001 to 20 g/m$^2$/day $\times$ $\mu$m, and the HAZE satisfies 15 to 50.

The index of water vapor barrier property per $\mu$m is low in Examples 1 to 3, and the water vapor barrier property in Examples 1 to 3 is comparative or superior to that of the gas barrier coating containing the smectite particles (Comparative Example 2). In addition, the HAZE is lower (i.e., higher transparency) in Examples 1 to 3 than in Comparative Example 2. In Comparative Example 3 (wherein the amount of each of the quaternary ammonium ions and the anionic surfactant is more than 3.0% by mass relative to the mass of the ilerite nanosheets (plate-like particles)), film formability is poor, and a homogeneous film fails to be formed. Therefore, the resultant film is difficult to evaluate as a gas barrier film.

Thus, the gas barrier film-forming composition containing ilerite nanosheets of the present invention can prepare a gas barrier film exhibiting superior water vapor barrier property and transparency.

INDUSTRIAL APPLICABILITY

When a base is coated with the gas barrier film-forming composition to thereby form a gas barrier film, the composition exhibits good coating property. This good coating property enables formation of a gas barrier film exhibiting low HAZE (haze value), high transparency, and high water vapor barrier property.

**Claims**

1. A gas barrier film-forming composition comprising the following components (A), (B), and (C):

   component (A): plate-like particles (A) composed of exfoliated layer substances generated through interlayer exfoliation of a layered compound, the plate-like particles (A) having an average thickness of 0.7 nm to 100 nm, an average major-axis length of 100 nm to 100,000 nm, and a ratio of (maximum major-axis length/width orthogonal to maximum major-axis length) of 1.0 to 10.0, and containing quaternary ammonium ions (a) each having a total carbon atom number of 13 to 45 and one or two $C_{10-20}$ alkyl groups, and an anionic surfactant (b) having an ammonium ion, wherein the amount of each of the quaternary ammonium ions (a) and the anionic surfactant (b) is more than 0% by mass and 3.0% by mass or less relative to the mass of the plate-like particles (A);
   component (B): a water-soluble polymer (B); and
   component (C): an aqueous medium.

2. The gas barrier film-forming composition according to claim 1, wherein the layered compound is ilerite.

3. The gas barrier film-forming composition according to claim 1 or 2, wherein the plate-like particles (A) are present in an aqueous dispersion in which the layered compound has an average particle diameter of 10 nm to 500,000 nm as measured by dynamic light scattering.

4. The gas barrier film-forming composition according to any one of claims 1 to 3, wherein the amount of each of the quaternary ammonium ions (a) and the anionic surfactant (b) is 0.01 to 3.0% by mass relative to the mass of the plate-like particles (A).

5. The gas barrier film-forming composition according to any one of claims 1 to 4, wherein the water-soluble polymer (B) has a monomer unit structure containing a hydroxyl group or a carboxyl group in the entire polymer unit structure, and the proportion of the monomer unit structure is 30 mol% to 100 mol%.

6. The gas barrier film-forming composition according to any one of claims 1 to 5, wherein the water-soluble polymer (B) is an ethylene-vinyl alcohol copolymer (EVOH), polyvinyl alcohol (PVA), polyacrylic acid (PAA) or a copolymer thereof, or a mixture of any of these.

7. The gas barrier film-forming composition according to any one of claims 1 to 6, wherein the amount of the component (A) is 0.1 to 10% by mass, and the amount of the component (B) is 0.1 to 10% by mass.

8. The gas barrier film-forming composition according to any one of claims 1 to 7, wherein the composition further comprises an alkali component and has a pH of 8.0 to 12.0.

9. The gas barrier film-forming composition according to claim 8, wherein the alkali component is ammonia, a primary alkylamine, a secondary alkylamine, a tertiary alkylamine, or a quaternary alkylammonium hydroxide.

10. A formed product comprising a base and a gas barrier film disposed on the surface of the base, wherein the gas barrier film is formed from the gas barrier film-forming composition according to any one of claims 1 to 9.

11. The formed product according to claim 10, wherein the base is polyethylene terephthalate, polyethylene, polypropylene, polyamide, nylon, polylactic acid, polyvinyl chloride, or polyvinyl dichloride.

12. The formed product according to claim 10 or 11, wherein the gas barrier film has a thickness of 50 nm to 50 $\mu$m.

13. The formed product according to any one of claims 10 to 12, wherein the gas is water vapor, and the value obtained by multiplying water vapor transmission rate ($g/m^2/day$) by thickness ($\mu m$) is 0.001 to 20 $g/m^2/day \times \mu m$.

14. The formed product according to any one of claims 10 to 13, wherein the formed product has a HAZE (haze value) of 15 to 50.

15. A method for producing the gas barrier film-forming composition according to any one of claims 1 to 9, the method comprising the following steps (i) to (vii):

step (i): a step of producing an aqueous dispersion of a layered compound;
step (ii): a step of adding quaternary ammonium ions (a) each having a total carbon atom number of 13 to 45 and one or two $C_{10-20}$ alkyl groups to the aqueous dispersion produced in the step (i) in an amount corresponding to one to 20 times the ion-exchange capacity of the layered compound, and heating the resultant mixture at 40 to 100°C for 1 to 100 hours;
step (iii): a step of adding pure water to the liquid prepared in the step (ii), and removing a sodium-ion-containing liquid to the outside of the system so as to achieve a sodium ion concentration of 1,000 ppm or less in the liquid;
step (iv): a step of dispersing solid matter contained in the product prepared in the step (iii) in an aqueous solution of an anionic surfactant (b) containing ammonium ions at a concentration of 0.01 to 20% by mass, and then adding ammonia to the resultant dispersion so as to adjust the pH of the dispersion to 9.0 to 12.0;
step (v): a step of heating the dispersion prepared in the step (iv) at 40 to 100°C for 1 to 100 hours;
step (vi): a step of obtaining, from the dispersion prepared in the step (v), plate-like particles (A) containing reduced amounts of the quaternary ammonium ions (a) and the anionic surfactant (b); and
step (vii): a step of mixing the plate-like particles (A) obtained in the step (vi) with a water-soluble polymer (B) and an aqueous medium (C).

16. The method for producing the gas barrier film-forming composition according to claim 15, wherein the step (vi) is a step of obtaining the plate-like particles (A) containing reduced amounts of the quaternary ammonium ions (a) and the anionic surfactant (b) by the following step (vi-1), (vi-2), or (vi-3), or any combination of these:

step (vi-1): centrifuging the dispersion of the plate-like particles (A) at a centrifugal acceleration of 3,000 to 100,000 G, to thereby yield the plate-like particles (A);
step (vi-2): precipitating the plate-like particles (A) by addition of a hydrophilic organic solvent to the dispersion of the plate-like particles (A), followed by solid-liquid separation; or
step (vi-3): separating the plate-like particles (A) by filtration of the dispersion of the plate-like particles (A) with a filter or ultrafiltration of the dispersion.

17. The method for producing the gas barrier film-forming composition according to claim 15 or 16, wherein the method further comprises the following step (vii-1) after the step (vi):
step (vii-1): a step of mixing the plate-like particles (A) obtained in the step (vi) with an alkali component and the aqueous medium (C) to thereby adjust the pH of the resultant mixture to 8.0 to 12.0, and then subjecting the mixture to dispersion treatment to thereby prepare a dispersion of the plate-like particles (A):
step (vii): a step of mixing the dispersion of the plate-like particles (A) prepared in the step (vii-1) with the water-soluble polymer (B) and the aqueous medium (C).

18. A method for producing a formed product, the method comprising a step of applying the gas barrier film-forming composition according to any one of claims 1 to 9 to the surface of a base, and heating the composition at a temperature of 30 to 200°C, to thereby form a gas barrier film.

19. The method for producing a formed product according to claim 18, wherein the composition is applied by roll coating, spray coating, ink jetting, spin coating, bar coating, slit coating, or dipping.

## INTERNATIONAL SEARCH REPORT

| International application No. |
| --- |
| **PCT/JP2021/048012** |

**A.    CLASSIFICATION OF SUBJECT MATTER**

*B32B 9/00*(2006.01)i; *C08K 5/17*(2006.01)i; *C08L 23/08*(2006.01)i; *C08L 29/04*(2006.01)i; *C08L 33/02*(2006.01)i; *C08L 101/00*(2006.01)i; *C08L 101/08*(2006.01)i; *C08K 3/24*(2006.01)i; *C08K 3/28*(2006.01)i; *C08K 3/34*(2006.01)i
FI:    C08L101/00; B32B9/00 A; C08K3/24; C08K3/34; C08L101/08; C08L29/04 G; C08L23/08; C08L33/02; C08K3/28; C08K5/17

According to International Patent Classification (IPC) or to both national classification and IPC

**B.    FIELDS SEARCHED**

Minimum documentation searched (classification system followed by classification symbols)

B32B9/00; C08K5/17; C08L23/08; C08L29/04; C08L33/02; C08L101/00; C08L101/08; C08K3/24; C08K3/28; C08K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 8-67578 A (TOYOTA CENTRAL RES & DEV LAB INC) 12 March 1996 (1996-03-12) entire text, all drawings | 1-19 |
| A | JP 9-2813 A (AGENCY OF IND SCIENCE & TECHNOL) 07 January 1997 (1997-01-07) entire text, all drawings | 1-19 |
| A | JP 2020-11861 A (UNIV PUBLIC CORP OSAKA) 23 January 2020 (2020-01-23) entire text, all drawings | 1-19 |
| A | WO 2020/153352 A1 (UNIV PUBLIC CORP OSAKA) 30 July 2020 (2020-07-30) entire text, all drawings | 1-19 |
| P, A | JP 2021-59468 A (UNIV PUBLIC CORP OSAKA) 15 April 2021 (2021-04-15) entire text, all drawings | 1-19 |

☐ Further documents are listed in the continuation of Box C.    ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **15 February 2022** | **08 March 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2021/048012**

| Patent document cited in search report | | | Publication date (day/month/year) | Patent family member(s) | | | Publication date (day/month/year) |
|---|---|---|---|---|---|---|---|
| JP | 8-67578 | A | 12 March 1996 | US entire text, all drawings | 5599759 | A | |
| JP | 9-2813 | A | 07 January 1997 | (Family: none) | | | |
| JP | 2020-11861 | A | 23 January 2020 | (Family: none) | | | |
| WO | 2020/153352 | A1 | 30 July 2020 | (Family: none) | | | |
| JP | 2021-59468 | A | 15 April 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001316551 A
- JP 2007313891 A
- JP 2011057912 A
- JP 2020513298 A
- WO 2020153352 A